# EUROPÄISCHE PATENTANMELDUNG

(11) **EP 0 947 399 A2**
(43) Veröffentlichungstag der Anmeldung: **06.10.1999**
(21) Anmeldenummer: 99105100.4
(22) Anmeldetag: 25.03.1999
(51) Int. Cl.: B60R 22/18

(54) **Gurtstraffer mit Linearantrieb**

(30) Priorität: 03.04.1998 DE 29806199 U
(71) Anmelder: TRW Occupant Restraint Systems GmbH & Co. KG, 73551 Alfdorf (DE)
(72) Erfinder: Holzapfel, Volker, 66606 St. Wendel (DE)
(74) Vertreter: Degwert, Hartmut, Dipl.-Phys.

(57) **Zusammenfassung**

Ein Gurtstraffer für einen Fahrzeug-Sicherheitsgurt weist einen aus Kolben und Zylinderrohr (12) gebildeten Linearantrieb und einen Gurtangriffsteil (14) auf, das mit dem Kolben durch ein umgelenktes Zugelement (20) verbunden ist. Um einen Gurtstraffer zu schaffen, der leichter in bestehende Fahrzeugkonzepte integriert werden kann, ist das Gurtangriffsteil (14) in einem am Fahrzeugaufbau flachliegend zu befestigenden Führungsbeschlag (10) verschiebbar geführt und das Zylinderrohr (12) ist auf oder neben dem Führungsbeschlag (10) befestigt.

## Beschreibung

Die Erfindung betrifft einen Gurtstraffer für einen Fahrzeug-Sicherheitsgurt, mit einem aus Kolben und Zylinderrohr gebildeten Linearantrieb und einem Gurtangriffsteil, das mit dem Kolben durch ein umgelenktes Zugseil verbunden ist, sowie einem Gurtstraffer mit einem Strafferantrieb und einem mit dem Strafferantrieb und einem Gurtband verbundenen Gurtangriffsteil.

Gurtstraffer sind in zahlreichen Ausführungen bekannt. Man unterscheidet zwischen Rotationsstraffern, die üblicherweise an einem Gurtaufroller angeordnet werden, und Linearstraffern, die in den Kraftfluß des Gurtbandes eingefügt sind. Linearstraffer sind von einfacher Bauart, jedoch bereitet ihre Unterbringung im Fahrzeug oft Schwierigkeiten.

Durch die Erfindung wird ein Gurtstraffer geschaffen, der leichter in bestehende Fahrzeugkonzepte integriert werden kann. Gemäß der Erfindung wird dies dadurch erreicht, daß das Gurtangriffsteil in einem am Fahrzeugaufbau flachliegend zu befestigenden Führungsbeschlag verschiebbar geführt ist und das Zylinderrohr auf oder neben dem Führungsbeschlag befestigt ist. Gemaß der Erfindung wird dies auch dadurch erreicht, daß bei einem Gurtstraffer mit einem Strafferantrieb und einem mit dem Strafferantrieb und einem Gurtband verbundenen Gurtangriffsteil ein Führungselement zum progressiven Falten des Gurtbandes vorgesehen ist.

Durch die flache Bauform des Gurtstraffers kann dieser z. B. unmittelbar am Boden eines Fahrzeugaufbaus befestigt werden. Die dann erforderliche Umlenkung des Gurtbandes geschieht vorzugsweise mit einem an den Führungsbeschlag angeformten Gurtband-Umlenkelement.

Bei einer ersten Ausführungsform, die sich durch geringe Bauhöhe auszeichnet, ist das Gurtangriffsteil als flache Lasche ausgebildet, die in einem entsprechend flachen Führungskanal des Führungsbeschlages verschiebbar aufgenommen ist.

Bei einer zweiten Ausführungsform, die sich durch geringe Baulänge auszeichnet, ist ein Ende des Gurtbandes am Führungsbeschlag befestigt; das Gurtangriffsteil greift zwischen dem Gurtbandende und einer Gurtbandumlenkung am Gurtband unter Bildung einer Schlaufe an.

Indem das Gurtband durch ein Führungselement progressiv gefaltet werden kann, verringert sich der Bauraum zur Unterbringung des gefalteten Gurtbandes gegenüber nicht gefaltetem Gurtband. Der Gurtstraffer kann dadurch kompakter ausgeführt werden.

Weitere Vorteile und Merkmale der Erfindung ergeben sich aus der folgenden Beschreibung mehrerer Ausführungsformen und aus der Zeichnung, auf die Bezug genommen wird. In der Zeichnung zeigen:
Fig. 1 eine Perspektivansicht einer ersten Ausführungsform des Gurtstraffers;
Fig. 2 einen schematischen Längsschnitt des in Fig. 1 gezeigten Gurtstraffers;
Fig. 3 eine vergrößerte Teilansicht einer zweiten Ausführungsform des Gurtstraffers;
Fig. 4 eine schematische Darstellung der Verformung des Gurtbandes beim Einlauf in den Führungsbeschlag;
Fig. 5 ein ringförmiges Führungselement zum Falten des Gurtbandes;
Fig. 6 ein weiteres Führungselement zum Falten des Gurtbandes; und
Fig. 7 eine weitere Ausführungsform des erfindungsgemäßen Gurtstraffers.

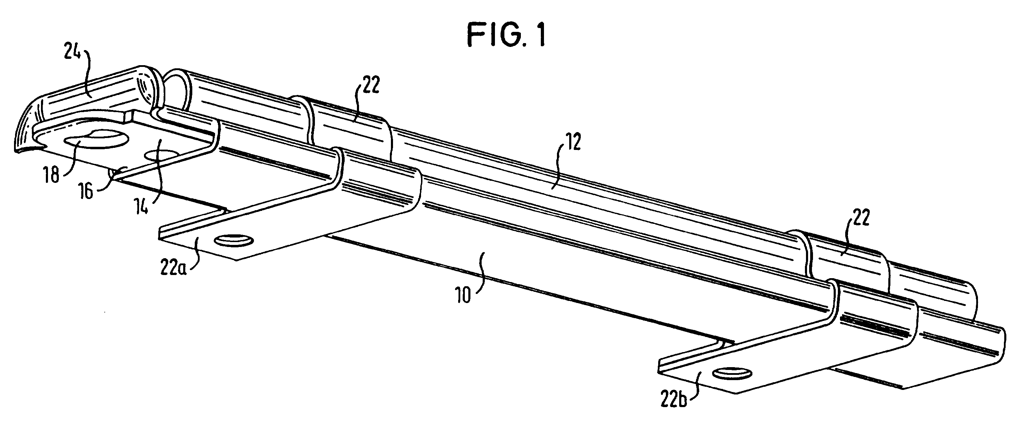

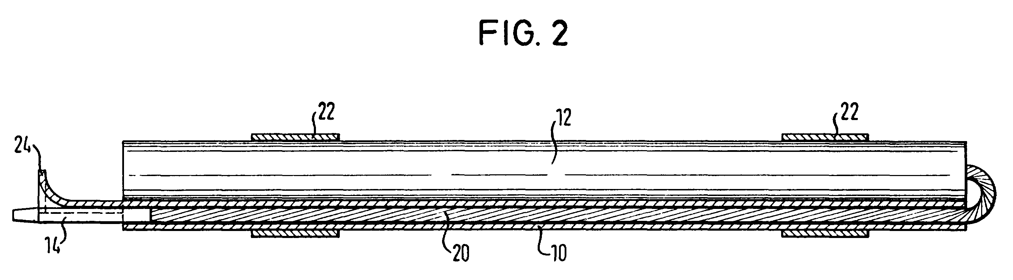

Bei der in Fig. 1 gezeigten Ausführungsform besteht der Gurtstraffer aus einem flachen, langgestreckten Führungsbeschlag 10, einem unmittelbar auf diesem befestigten Linearantrieb mit Zylinderrohr 12 und einem darin verschiebbaren (nicht gezeigten) Kolben sowie einem Gurtangriffsteil in Form einer flachen Lasche 14, die in einem entsprechend geformten Führungskanal 16 des Führungsbeschlages verschiebbar aufgenommen ist. Das aus dem Führungskanal 16 herausragende Ende der Lasche 14 ist mit einer Öse 18 zum Einschlaufen des Gurtbandes versehen. Das gegenüberliegende Ende der Lasche 14 ist durch ein Zugseil 20 (Fig. 2) mit dem Kolben im Inneren des Zylinderrohres 12 verbunden.. Das aus dem Ende des Führungskanals 16 austretende Zugseil 20 ist um 180° umgelenkt und in das Zylinderrohr 12 hineingeführt. Das Zylinderrohr 12 ist mit dem Führungsbeschlag 10 durch zwei rohrschellenartige Befestigungsteile 22, 24 verbunden, die mit angeformten Befestigungslaschen 22a, 22b zur unmittelbaren Befestigung am Fahrzeugaufbau versehen sind.

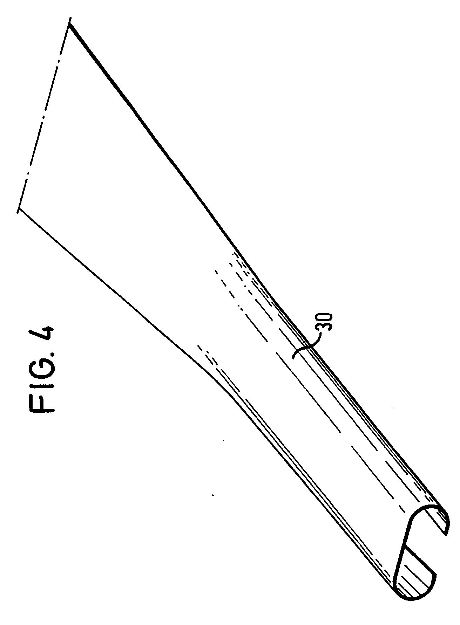

Der Führungsbeschlag 10 ist an seinem der Lasche 14 benachbarten Ende mit einem angeformten Gurtband-Umlenkelement 24 versehen. Dieses Gurtband-Umlenkelement mündet trichterförmig in den Führungskanal 16 ein. Es ist so gestaltet, daß es zugleich mit der gewünschten Gurtband-Umlenkung das Gurtband entlang seinen Längsrändern progressiv umfaltet, wie in Fig. 4 dargestellt, wodurch die erforderliche Breite des Führungskanals 16 vermindert werden kann.

Bei Aktivierung des Gurtstraffers wird der Kolben im Inneren des Zylinderrohres 12 mit Druckgas beaufschlagt und zum gegenüberliegenden Ende des Zylinderrohres getrieben. Über das Zugseil 20 wird nun die Lasche 14 und mit ihr das daran befestigte Gurtbandende in den Führungskanal 16 gezogen. Die Bewegungen des Kolbens im Inneren des Zylinderrohres 12 und der Lasche im Inneren des Führungskanals 16 sind gegenläufig. Der mit dieser Ausführung des Gurtstraffers erreichbare Hub entspricht der Länge des Zylinderrohres bzw. Führungsbeschlages. Das Zylinderrohr 12 kann beliebig auf dem Führungsbeschlag 10 oder auch neben diesem angeordnet werden. Dadurch ergibt sich eine sehr flache Bauform.

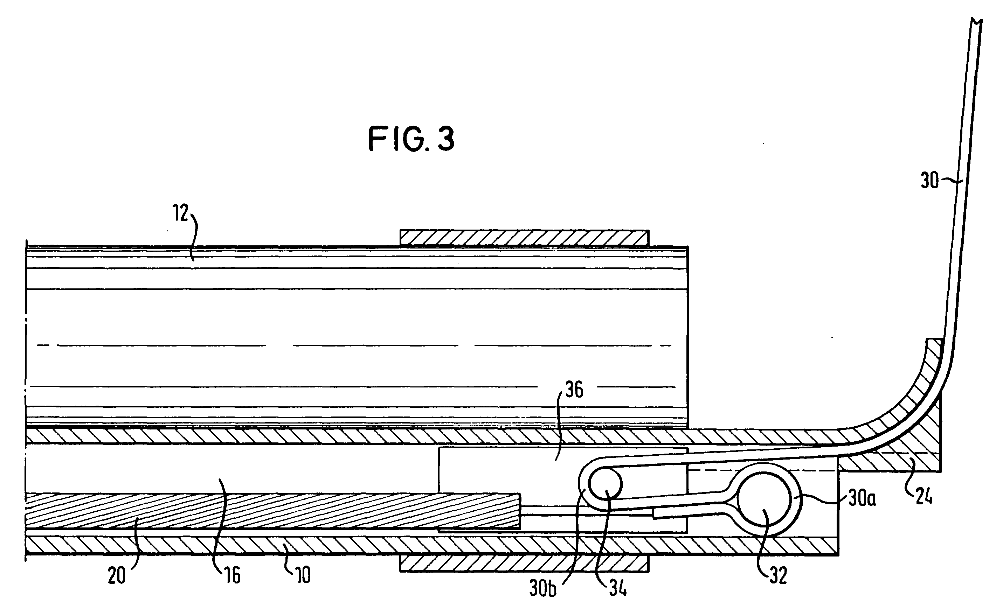

Bei der in Fig. 3 gezeigten Ausführungsform ist ein Ende des Gurtbandes 30 am Führungsbeschlag 10 festgelegt. Die Befestigung des Gurtbandendes erfolgt mittels einer Schlaufe 30a, die auf einen Zapfen 32 am Führungsbeschlag 10 aufgeschoben ist. Zwischen dem Ende des Gurtbandes 30 und dem Gurtband-Umlenkelement 24 greift ein Stift oder Zapfen 34 unter Bildung einer Schlaufe 30b am Gurtband an. Dieser Stift oder Zapfen 34 ist an einem Schlitten 36 befestigt, der im Inneren des Führungskanals 16 des Führungsbeschlages 10 verschiebbar aufgenommen ist. An diesen Schlitten 36 ist das Zugseil 20 angekoppelt.

Bei dieser Ausführungsform, die wegen der doppelten Gurtbandlage im Führungskanal 16 eine etwas größere Bauhöhe benötigt als die zuvor beschriebene Ausführungsform, kann für einen gegebenen Hub die Baulänge halbiert werden. Auch bei dieser Ausführungsform ist die Anordnung des Zylinderrohres 12 auf den Führungsbeschlag 10 beliebig, beide Teile können auch liegend nebeneinander angeordnet werden.

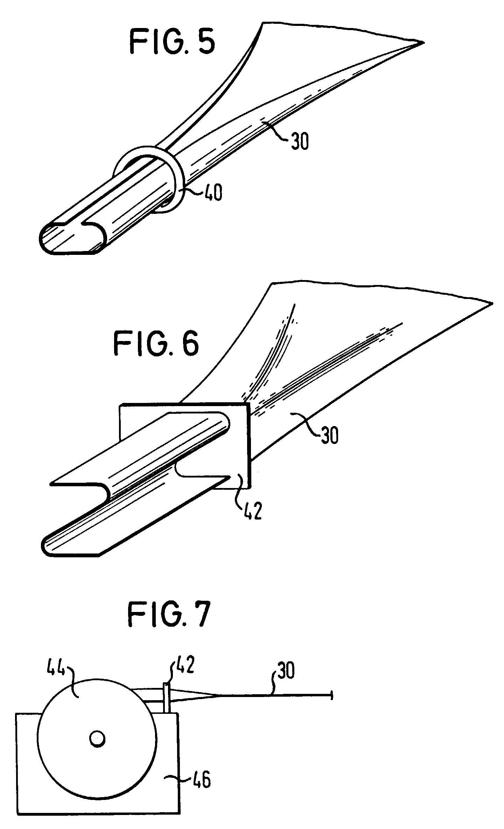

Figur 5 zeigt ein ringförmiges Führungselement 40, durch das das Gurtband 30, wenn es durch das Führungselement 40 gezogen wird, U-förmig umgefaltet wird.

In Figur 6 ist ein Führungselement 42 dargestellt, durch das das Gurtband 30, wenn es durch das Führungselement 42 gezogen wird, zickzackförmig umgefaltet wird.

Sowohl durch das in der Figur 5 als auch das in der Figur 6 gezeigte Führungselement wird die Breite des Gurtbandes durch Faltung reduziert. Dadurch kann auch die Breite des Gurtstraffers selbst reduziert werden.

Eine weitere Ausführungsform des erfindungsgemäßen Gurtstraffers ist in der Figur 7 dargestellt. Der Strafferantrieb 46 treibt eine Gurtspule 44 an, auf die das durch das Führungselement 42 zickzackförmig umgefaltete Gurtband 30 aufgewickelt wird. Die Gurtspule 44 kann dadurch gegenüber konventionellen Ausführungen in der Breite reduziert werden.

## Patentansprüche

1. Gurtstraffer für einen Fahrzeug-Sicherheitsgurt, mit einem aus Kolben und Zylinderrohr (12) gebildeten Linearantrieb und einem Gurtangriffsteil (14; 34), das mit dem Kolben durch ein umgelenktes Zugelement (20) verbunden ist, dadurch gekennzeichnet, daß das Gurtangriffsteil (14; 34) in einem am Fahrzeugaufbau flachliegend zu befestigenden Führungsbeschlag (10) verschiebbar geführt ist und das Zylinderrohr (12) auf oder neben dem Führungsbeschlag (10) befestigt ist.

2. Gurtstraffer nach Anspruch 1, dadurch gekennzeichnet, daß das Zugelement (20) zwischen dem Zylinderrohr (12) und dem Führungsbeschlag (10) um 180° umgelenkt ist.

3. Gurtstraffer nach Anspruch 1 oder 2, dadurch gekennzeichnet, daß der Führungsbeschlag (10) mit einem angeformten Gurtband-Umlenkelement (24) versehen ist.

4. Gurtstraffer nach einem der vorstehenden Ansprüche, dadurch gekennzeichnet, daß das Gurtangriffsteil (14) eine flache Lasche bildet, die in einem entsprechend flachen Führungskanal (16) des Führungsbeschlages (10) verschiebbar aufgenommen ist.

5. Gurtstraffer nach einem der Ansprüche 1 bis 3, dadurch gekennzeichnet, daß ein Ende (30a) des Gurtbandes (30) am Führungsbeschlag (10) befestigt ist und das Gurtangriffsteil (34) zwischen dem Gurtbandende und einer Gurtbandumlenkung (24) am Gurtband unter Bildung einer Schlaufe (30b) angreift.

6. Gurtstraffer nach einem der vorstehenden Ansprüche, dadurch gekennzeichnet, daß der Führungsbeschlag (10) einen Führungskanal (16) aufweist, in dem das Gurtangriffsteil verschiebbar aufgenommen ist, und der Führungskanal (16) eine mit einem angeformten trichterartigen Gurtband-Umlenkteil (24) versehene Einmündung aufweist, durch die das Gurtband (30) an seinen Längsrändern progressiv umgefaltet wird.

7. Gurtstraffer nach Anspruch 6, dadurch gekennzeichnet, daß das Gurtband (30) durch die Einmündung an seinen Längsrändern U-förmig umgefaltet wird.

8. Gurtstraffer nach Anspruch 6, dadurch gekennzeichnet, daß das Gurtband (30) durch die Einmündung zickzackförmig gefaltet wird.

9. Gurtstraffer für einen Fahrzeug-Sicherheitsgurt, mit einem Strafferantrieb und einem mit dem Strafferantrieb und einem Gurtband (30) verbundenen Gurtangriffsteil, dadurch gekennzeichnet, daß ein Führungselement (40; 42) zum progressiven Falten des Gurtbandes (30) vorgesehen ist.

10. Gurtstraffer nach Anspruch 9, dadurch gekennzeichnet, daß das Führungselement (40) ringförmig ist.

11. Gurtstraffer nach Anspruch 9 oder 10, dadurch gekennzeichnet, daß das Gurtband (30) an seinen Längsrändern U-förmig umgefaltet wird.

12. Gurtstraffer nach Anspruch 9, dadurch gekennzeichnet, daß das Gurtband (30) an seinen Längsrändern zickzackförmig umgefaltet wird.

13. Gurtstraffer nach einem der Ansprüche 9 bis 12, dadurch gekennzeichnet, daß eine von dem Strafferantrieb (46) rotatorisch angetriebene Gurtspule (44) zum Aufwickeln des umgefalteten Gurtbandes (30) vorgesehen ist.

14. Gurtstraffer nach einem der Ansprüche 9 bis 12, dadurch gekennzeichnet, daß der Strafferantrieb ein aus Kolben und Zylinderrohr (12) gebildeter Linearantrieb ist.
